# EUROPÄISCHE PATENTSCHRIFT

(11) **EP 2 443 033 B1**
(45) Veröffentlichungstag und Bekanntmachung des Hinweises auf die Patenterteilung: **07.12.2016**
(21) Anmeldenummer: 10744681.7
(22) Anmeldetag: 16.06.2010
(51) Int. Cl.: B64D 11/06

(54) **PASSAGIERSITZVORRICHTUNG**
PASSENGER SEAT DEVICE
SYSTÈME DE SIÈGE PASSAGER

(30) Priorität: 19.06.2009 DE 102009025505
(43) Veröffentlichungstag der Anmeldung: 25.04.2012
(73) Patentinhaber: Recaro Aircraft Seating GmbH & Co. KG, 74523 Schwäbisch Hall (DE)
(72) Erfinder: BAUMANN, Jürgen, 78531 Bodman-Ludwigshafen (DE)
(74) Vertreter: Daub, Thomas
(86) Internationale Anmeldenummer: PCT/EP2010/003615
(87) Internationale Veröffentlichungsnummer: WO 2010/145812

(56) Entgegenhaltungen:
- EP-A1- 0 621 174
- EP-A2- 1 236 642
- DE-A1- 3 512 953

## Beschreibung

### Stand der Technik

Die Erfindung geht aus von einer Passagiersitzvorrichtung nach dem Oberbegriff des Patentanspruchs 1.

Aus der US 2008/0265646 A1 und der dem Oberbegriff entsprechenden EP 0 621 174 A1 ist bereits eine Flugzeugsitzvorrichtung mit einem Sitzteil und einer Armlehnenkonsole bekannt, die auf einer einem Gang des Flugzeugs zugewandten Seite eine vom Sitzteil gebildete Sitzfläche seitlich begrenzt.

Der Erfindung liegt die Aufgabe zugrunde, eine gattungsgemäße Passagiersitzvorrichtung bereitzustellen, durch welche der Komfort von in ihrer Beweglichkeit beschränkten Passagieren erhöht werden kann.

Diese Aufgabe ist durch eine Passagiersitzvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Passagiersitzvorrichtung, insbesondere Fluggastsitzvorrichtung, mit einem Sitzteil (18), das eine Sitzfläche (26) aufweist, einer Sitzrichtung (14) und einem Grundkörper (32), welcher in einem Einbauzustand in einem Transportmittel an einen Gang (12) angrenzt und in einer Nutzposition in einem Bereich (30) bezüglich der Sitzrichtung (14) seitlich der Sitzfläche (26) diese Sitzfläche (26) seitlich bedeckt, mit einer Lagereinheit (53) zur beweglichen Lagerung des Grundkörpers (32), die dazu vorgesehen ist, den Grundkörper (32) von der Nutzposition in eine Freigabeposition mit einer zur Sitzfläche (26) relativen Bewegung zu verstellen, die eine Freigabe des Bereichs (30) seitlich der Sitzfläche (26) bewirkt, und mit einer Schwenkvorrichtung (54) zur schwenkbaren Lagerung des Grundkörpers (32) relativ zur Sitzfläche (26).
Es wird vorgeschlagen, dass die Schwenkvorrichtung (54) zumindest zwei unterschiedliche Schwenkachsen (58, 66) aufweist, wobei eine (58) der Schwenkachsen zur Neigungsbewegung des Grundkörpers (32) relativ zu einer Vertikalrichtung (40) vor einer Schwenkung in die Freigabeposition um die andere Schwenkachse (66) vorgesehen ist. Unter einer "Sitzfläche" soll insbesondere eine Fläche verstanden werden, die zur Stützung des Gesäßes eines sitzenden Passagiers vorgesehen ist. Sie unterscheidet sich insbesondere von einer Rückenlehnenfläche, die zur Stützung des Rückens des Passagiers dient. In einer aufrechten Position eines Passagiersitzes ist die Sitzfläche bezüglich eines Transportmittelbodens vorzugsweise im Wesentlichen horizontal ausgerichtet. Unter der "Sitzrichtung" der Passagiersitzvorrichtung soll insbesondere eine relativ zu einem Transportmittelboden horizontale Richtung verstanden werden, die in einer aufrechten Position der Passagiersitzvorrichtung senkrecht zu einer Vorderkante des Sitzteils bzw. der Sitzfläche ausgerichtet ist, wobei die Vorderkante des Sitzteils bzw. der Sitzfläche zur Stützung des unteren Teils der Oberschenkel und des Kniebereichs eines sitzenden Passagiers dient. Die Sitzrichtung kann der Transportrichtung des Transportmittels entsprechen. Insbesondere bei der Anwendung in einer Flugzeugkabine entspricht die Sitzrichtung der Flugrichtung. Bei der Anwendung in einem Eisenbahnwagen, einem Reisebus oder einem Passagierschiff kann die Sitzrichtung entgegen der Transportrichtung oder quer dazu ausgerichtet sein. Unter einem "Gang" soll in einer Anordnung von Passagiersitzen ein Raum verstanden werden, welcher zu einer Bewegung von Passagieren innerhalb der Sitzanordnung, z.B. um sich zu einem zugewiesenen Passagiersitz zu begeben, vorgesehen ist. Der Grundkörper "grenzt" ferner an den Gang an, indem er insbesondere eine Außenfläche bildet, die den für den Gang vorgesehenen Raum begrenzt. Unter einem Bereich, der bezüglich der Sitzrichtung "seitlich der Sitzfläche" angeordnet ist, soll insbesondere ein Bereich verstanden werden, der in einer Lateralrichtung, die bezüglich des Transportmittelbodens horizontal und senkrecht zur Sitzrichtung ausgerichtet ist, an die Sitzfläche angrenzt. Unter "vorgesehen" soll insbesondere speziell ausgestaltet, ausgeformt oder ausgestattet verstanden werden.

In einer alternativen Ausführungsvariante kann die Schwenkvorrichtung derart ausgestaltet sein, dass eine Neigungsbewegung und eine Schwenkung des Grundkörpers nach oben gleichzeitig erfolgen, wobei bei einer Schwenkung des Grundkörpers nach oben dieser relativ zur Vertikalrichtung geneigt wird.

Die Lagereinheit kann außerdem als Führungseinheit dienen, die dazu vorgesehen ist, den Grundkörper von der Nutzposition in die Freigabeposition zu führen.

Dadurch, dass der an den Gang angrenzende Grundkörper in dessen Nutzposition im Bereich seitlich der Sitzfläche diese Sitzfläche seitlich bedeckt, stellt der Grundkörper ein Hindernis dar, welches in der Lateralrichtung betrachtet zwischen der Sitzfläche und dem Gang angeordnet ist, wobei ein direkter Zugang vom Gang auf die Sitzfläche in der Lateralrichtung verhindert ist. Durch die erfindungsgemäße Ausgestaltung kann mittels der Freigabe des Bereichs seitlich der Sitzfläche ein einfacher Zugang zur Sitzfläche bereitgestellt werden, wobei ein erhöhter Komfort für einen in seiner Beweglichkeit eingeschränkten Passagier erreicht werden kann.

In einer bevorzugten Ausgestaltung der Erfindung wird vorgeschlagen, dass der Grundkörper einen Aufnahmebereich aufweist, der zur Aufnahme von zumindest einem Funktionsbauteil vorgesehen ist, wodurch eine besonders komfortable Passagiersitzvorrichtung erreicht werden kann. Das Funktionsbauteil, welches wahlweise vom Passagier aus dem Aufnahmebereich im Grundkörper herausgefahren werden kann, kann beispielsweise eine Tischvorrichtung sein. Vorteilhafterweise weist die Passagiersitzvorrichtung eine Elektronikeinheit auf, die in einer Stauposition im Aufnahmebereich angeordnet ist. Die Elektronikeinheit kann insbesondere eine Videounterhaltungseinheit, eine Kontrolleinheit usw. sein.

Eine besonders ergonomische Ausgestaltung der Passagiersitzvorrichtung kann ferner erreicht werden, wenn die Passagiersitzvorrichtung eine Armlehneneinheit mit einer Armlehnenfläche aufweist, wobei der Grundkörper die Armlehnenfläche trägt. Hierbei kann die Armlehneneinheit mit dem Grundkörper einstückig ausgebildet sein, wodurch eine kompakte und konstruktiv einfache Passagiersitzvorrichtung erreicht werden kann.

Insbesondere wird vorgeschlagen, dass die Lagereinheit dazu vorgesehen ist, bei der Überführung des Grundkörpers in die Freigabeposition eine Bewegung von zumindest einem Teil des Grundkörpers seitlich zur Sitzrichtung zu bewirken. Durch eine solche seitliche Bewegung von zumindest einem Teil des Grundkörpers kann eine Überführung des Grundkörpers in die Freigabeposition erreicht werden, die an die Ausgestaltung von übrigen Bestandteilen eines Passagiersitzes, wie insbesondere von einer Rückenlehne, angepasst ist. Besonders vorteilhaft bewirkt die Lagereinheit die Bewegung des Teils des Grundkörpers in Richtung des Gangs des Transportmittels.

Beispielsweise kann der Grundkörper mittels der Lagereinheit in Lateralrichtung verschoben werden, bevor er in die Freigabeposition z.B. durch eine Schwenkung verstellt wird. Eine konstruktiv einfache Ausgestaltung kann jedoch erreicht werden, wenn die Lagereinheit dazu vorgesehen ist, bei einer Überführung in die Freigabeposition eine Neigungsbewegung des Grundkörpers relativ zu einer Vertikalrichtung zu bewirken. Unter einer "Neigungsbewegung" relativ zu einer Vertikalrichtung soll insbesondere eine Abweichung von einer Ebene verstanden werden, die senkrecht zum Transportmittelboden und insbesondere parallel zur Sitzrichtung ausgerichtet ist.

Wenn die Schwenkvorrichtung eine einzige Schwenkachse aufweist, um die der Grundkörper zur Überführung in die Freigabeposition schwenkbar gelagert ist, kann eine konstruktiv einfache Lösung bereitgestellt werden, die besonders wenig Material und Bauteile erfordert.

In einer bevorzugten Ausgestaltung wird vorgeschlagen, dass die einzige Schwenkachse der Schwenkvorrichtung gegenüber dem Transportmittelboden geneigt und senkrecht zur Sitzrichtung angeordnet ist. Bei der Schwenkung des Grundkörpers aus der Nutzposition hin zu der Freigabeposition kann dadurch vorteilhaft einfach eine Bewegung des Grundkörpers erreicht werden, die von einer überlagerten, simultanen Bewegung aus einer Schwenkbewegung nach oben und einer Neigungsbewegung relativ zur Vertikalrichtung gebildet wird.

In einer weiteren vorteilhaften Ausgestaltung wird vorgeschlagen, dass die Schwenkachse parallel zum Transportmittelboden und relativ zu der Lateralrichtung gedreht angeordnet ist. Unter "relativ zu der Lateralrichtung gedreht" soll in diesem Zusammenhang insbesondere verstanden werden, dass eine durch die Schwenkachse definierte Richtung und die Lateralrichtung sich um mehr als 0,5° unterscheiden. Durch diese Anordnung der einzigen Schwenkachse der Schwenkvorrichtung kann vorteilhaft einfach eine Bewegung des Grundkörpers erreicht werden, die bei der Schwenkung des Grundkörpers aus der Nutzposition hin zu der Freigabeposition aus einer überlagerten, simultanen Bewegung aus einer Schwenkbewegung nach oben und einer Neigungsbewegung relativ zur Vertikalrichtung besteht.

Ferner wird vorgeschlagen, dass die Passagiersitzvorrichtung eine Verriegelungseinheit aufweist, die zu einer Verriegelung des Grundkörpers in der Nutzposition vorgesehen ist, wodurch eine hohe Sicherheit in der Anwendung der Passagiersitzvorrichtung erreicht werden kann.

In diesem Zusammenhang wird außerdem vorgeschlagen, dass die Passagiersitzvorrichtung eine Betätigungseinheit zur Entriegelung des Grundkörpers aufweist, die dazu vorgesehen ist, bei einer Entriegelung des Grundkörpers zumindest eine Teilbewegung des Grundkörpers automatisch zu bewirken, wodurch der Bedienkomfort weiter gesteigert werden kann.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Perspektivansicht eines Passagiersitzes mit einer Armlehnenkonsole, die an einen Gang angrenzt,
- Fig. 2: den Passagiersitz in einer Frontansicht,
- Fig. 3: eine weitere Perspektivansicht des Passagiersitzes aus Figur 1,
- Fig. 4: den Passagiersitz in der Ansicht aus Figur 2, mit der nach außen geneigten Armlehnenkonsole,
- Fig. 5: den Passagiersitz in einer Seitenansicht, mit der nach oben geschwenkten Armlehnenkonsole,
- Fig. 6: eine Draufsicht eines Passagiersitzes mit einem weiteren Ausführungsbeispiel einer Passagiersitzvorrichtung,
- Fig. 7: eine Vorderansicht des Passagiersitzes gemäß der Fig. 6,
- Fig. 8: eine Draufsicht eines Passagiersitzes mit einem weiteren Ausführungsbeispiel einer Passagiersitzvorrichtung und
- Fig. 9: eine Vorderansicht des Passagiersitzes gemäß der Fig. 8.

### Beschreibung des Ausführungsbeispiels

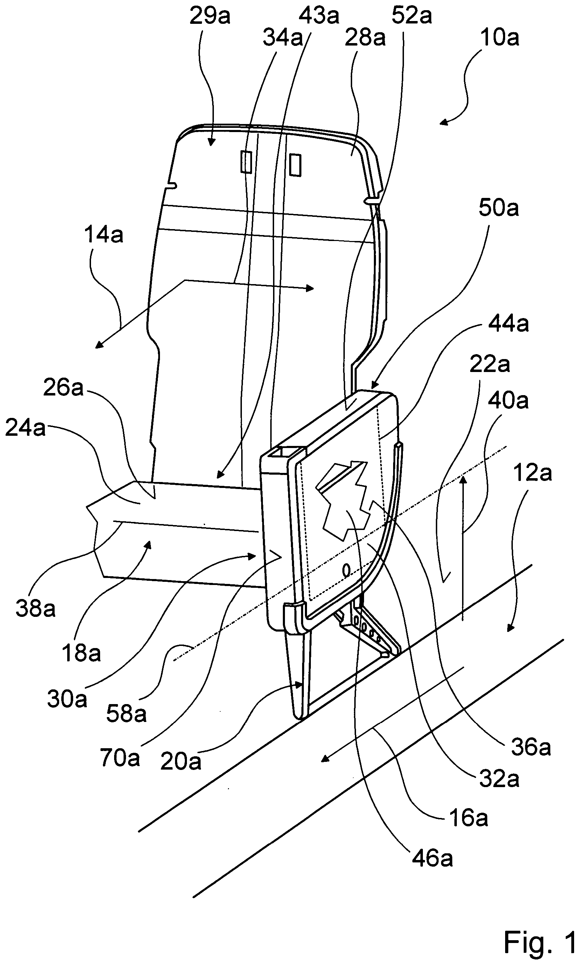

In den Figuren 1 bis 5, 6 und 7 sowie 8 und 9 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele die Buchstaben a, b und c hinzugefügt, wobei bezüglich gleich bleibender Bauteile, Merkmale und Funktionen auf die Beschreibung des Ausführungsbeispiels in den Figuren 1 bis 5 verwiesen werden kann.

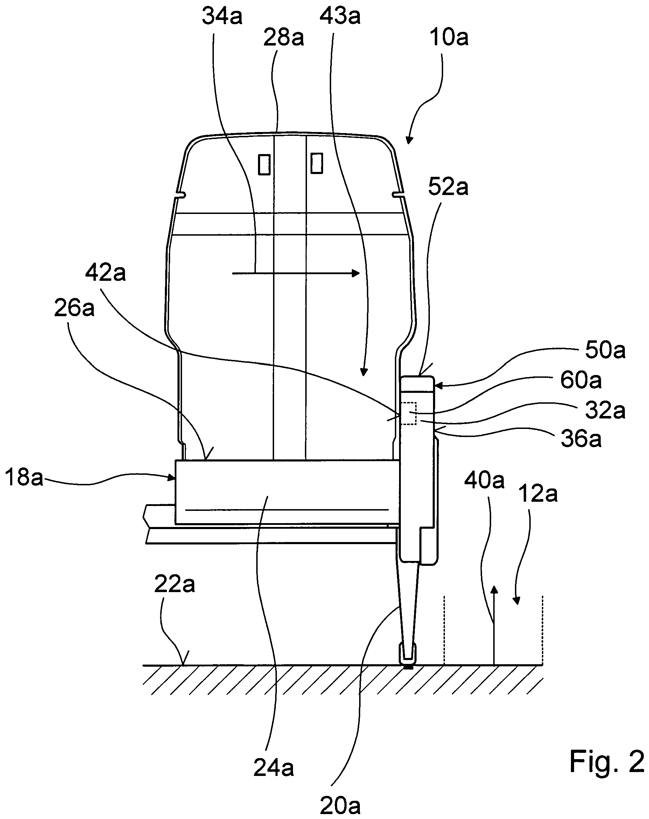

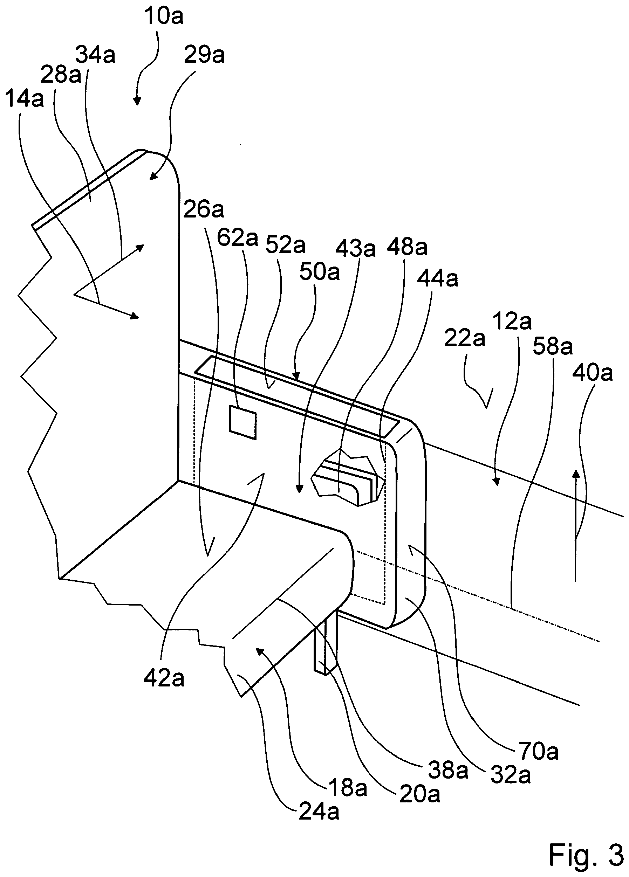

Figur 1 zeigt einen als Fluggastsitz ausgebildeten Passagiersitz 10a in einer perspektivischen Ansicht. Die folgende Beschreibung bezieht sich ebenfalls auf Figur 2 und Figur 3, die die Anordnung aus Figur 1 in weiteren Ansichten zeigen. Der Passagiersitz 10a ist in einem Einbauzustand in einem nicht näher dargestellten, als Flugzeug ausgebildeten Transportmittel angeordnet. Der Passagiersitz 10a kann in weiteren Ausführungen in weiteren Transportmitteln genutzt werden, und zwar beispielsweise in einem Eisenbahnwagen, einem Reisebus, einem Passagierschiff usw. Im gezeigten Einbauzustand grenzt der Passagiersitz 10a an einen Gang 12a an, welcher zu einer Bewegung von Passagieren innerhalb des Transportmittels vorgesehen ist. Insbesondere erstreckt sich der Gang 12a in Längsrichtung des Transportmittels und ermöglicht einen Zugang zu Reihen von Passagiersitzen 10a und/oder zu einzelnen Passagiersitzen 10a, die entlang des Gangs 12a angeordnet sind. Der Passagiersitz 10a weist eine Sitzrichtung 14a auf, die im betrachteten Beispiel der Transportrichtung bzw. der Flugrichtung entspricht und die parallel zur Haupterstreckungsrichtung 16a des Gangs 12a ausgerichtet ist. Reihen von Passagiersitzen 10a weisen eine Mehrzahl von Passagiersitzen 10a auf, die entlang einer Richtung senkrecht zur Haupterstreckungsrichtung 16a des Gangs 12a nebeneinander angeordnet sind.

Der Passagiersitz 10a weist eine Passagiersitzvorrichtung mit einem Sitzteil 18a auf, welches mittels einer Aufständereinheit 20a auf einem Transportmittelboden 22a aufgeständert ist. Das Sitzteil 18a weist eine von einer Polsterung 24a gebildete Sitzfläche 26a auf, die in einer aufrechten Position des Passagiersitzes 10a im Wesentlichen parallel zum Transportmittelboden 22a ausgerichtet ist. Der Passagiersitz 10a umfasst ferner eine Rückenlehne 28a, die in den Figuren bei abgenommener Polsterung dargestellt ist. Im montierten Zustand der Polsterung bildet diese eine Rückenlehnenfläche, die in einer aufrechten Position des Passagiersitzes 10a im Wesentlichen senkrecht zur Sitzrichtung 14a ausgerichtet ist. Die Rückenlehne 28a bildet ferner eine Kopfstütze 29a.

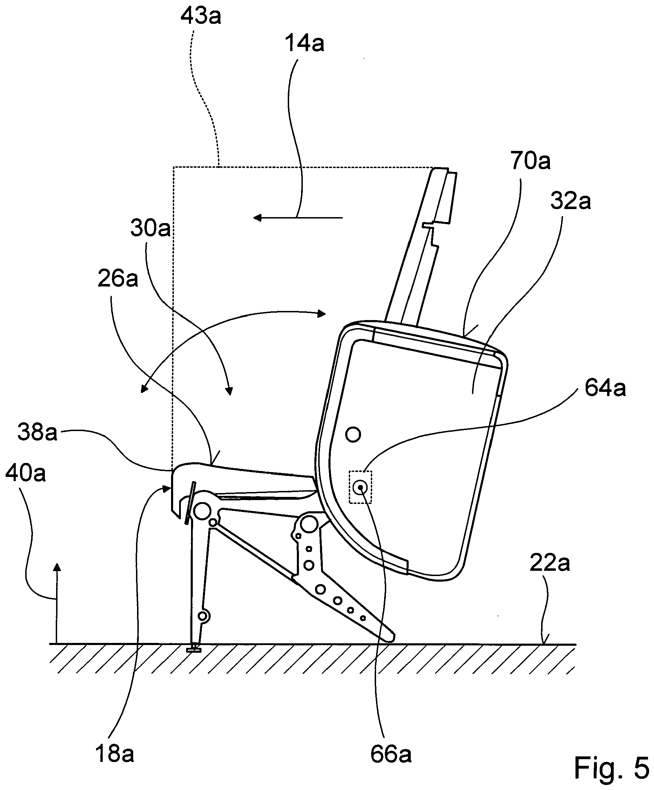

In einem Bereich 30a seitlich der Sitzfläche 26a ist ferner ein Grundkörper 32a der Passagiersitzvorrichtung in der Form einer Sitzkonsole angeordnet. Der Begriff "seitlich" in Bezug auf die Sitzrichtung 14a ist mittels einer Lateralrichtung 34a definiert, die parallel zum Transportmittelboden 22a und senkrecht zur Sitzrichtung 14a ausgerichtet ist. Der Grundkörper 32a grenzt an den Gang 12a an, wobei er eine Außenfläche 36a bildet, die dem Gang 12a direkt zugewandt ist. Bezüglich der Lateralrichtung 34a ist der Grundkörper 32a zwischen der Sitzfläche 26a und dem Gang 12a angeordnet. Der Grundkörper 32a erstreckt sich in Sitzrichtung 14a von einem hinteren Ende im Bereich der Rückenlehne 28a bis zu einem vorderen Ende, das in Sitzrichtung 14a zumindest im Bereich einer Vorderkante 38a der Sitzfläche 26a angeordnet ist. Im betrachteten Ausführungsbeispiel ist das vordere Ende des Grundkörpers 32a weiter vorne als die Vorderkante 38a der Sitzfläche 26a angeordnet. Anders ausgedrückt ragt der Grundkörper 32a über die Vorderkante 38a der Sitzfläche 26a in Sitzrichtung 14a hinaus. Bezüglich einer Vertikalrichtung 40a senkrecht zum Transportmittelboden 22a erstreckt sich der Grundkörper 32a von einem unteren Ende, das tiefer als die Sitzfläche 26a, und zwar tiefer als das Sitzteil 18a angeordnet ist, bis zu einem oberen Ende, das höher als die Sitzfläche 26a angeordnet ist. Der Grundkörper 32a bildet eine Seitenfläche 42a (siehe Figur 2), die der Außenfläche 36a gegenüberliegt und der Sitzfläche 26a zugewandt ist. Die Seitenfläche 42a ist vertikal ausgerichtet und verbindet den Bereich des unteren Endes des Grundkörpers 32a mit dem Bereich des oberen Endes des Grundkörpers 32a zusammenhängend. Demnach ist die Sitzfläche 26a vom Grundkörper 32a, und zwar von seiner Seitenfläche 42a, bezüglich der Sitzrichtung 14a seitlich bedeckt, oder - anders ausgedrückt - die Sitzfläche 26a ist vom Grundkörper 32a bzw. von der Seitenfläche 42a in Lateralrichtung 34a bedeckt. Ferner ist dadurch, dass das obere Ende des Grundkörpers 32a höher als die Sitzfläche 26a angeordnet ist, ein Sitzbereich 43a, der sich in Vertikalrichtung 40a oberhalb der Sitzfläche 26a erstreckt und in welchem der obere Teil des Körpers eines sitzenden Passagiers angeordnet ist (siehe insbesondere Figur 5), ebenfalls vom Grundkörper 32a seitlich bedeckt.

Der Grundkörper 32a ist als Sitzkonsole, und zwar insbesondere als Armlehnenkonsole, ausgebildet. Er ist mit einem Hohlraum ausgestattet, der als Aufnahmebereich 44a zur Aufnahme von Funktionsbauteilen 46a, 48a des Passagiersitzes 10a vorgesehen ist (siehe auch Figur 3). Im betrachteten Ausführungsbeispiel sind im Aufnahmebereich 44a die Funktionsbauteile 46a, 48a als eine Tischvorrichtung bzw. als eine Elektronikeinheit in der Form einer Videounterhaltungseinheit ausgebildet. Die Funktionsbauteile 46a, 48a können auf Wunsch eines im Passagiersitz 10a sitzenden Passagiers zu einer Anwendung aus dem Aufnahmebereich 44a im Grundkörper 32a herausgefahren werden.

Im Bereich seines oberen Endes dient der Grundkörper 32a als eine Armlehneneinheit 50a, welche eine Armlehnenfläche 52a bildet, die in der Nutzposition des Grundkörpers 32a im Wesentlichen parallel zum Transportmittelboden 22a ausgerichtet ist. Hiermit wird die Armlehnenfläche 52a vom Grundkörper 32a getragen. Im betrachteten Ausführungsbeispiel ist die Armlehneneinheit 50a mit dem Grundkörper 32a einstückig ausgebildet.

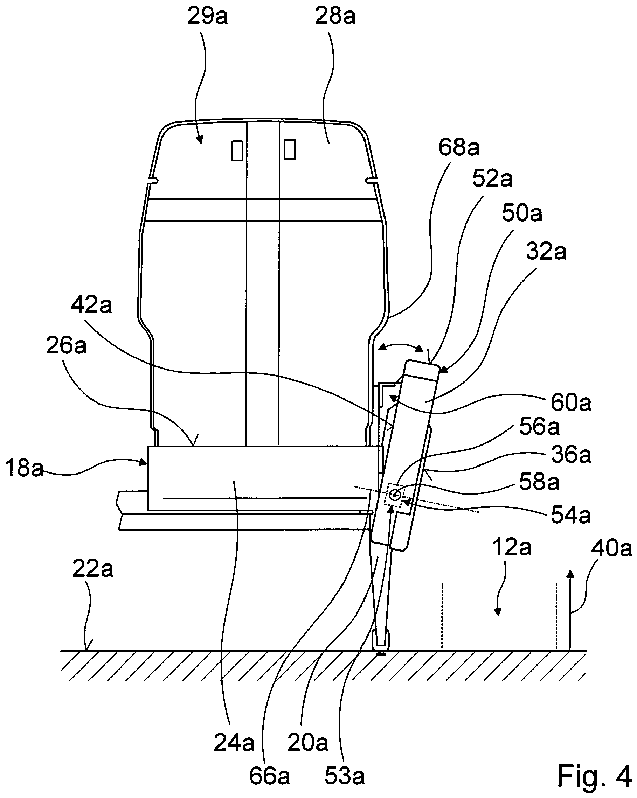

Um den Zugang zum Passagiersitz 10a für eine in ihrer Beweglichkeit eingeschränkte Person zu erleichtern, ist der Grundkörper 32a bzw. die Sitzkonsole relativ zur Sitzfläche 26a bewegbar. Wie die Figuren 4 und 5 zeigen, kann der Grundkörper 32a ausgehend von der Nutzposition (Figuren 1 bis 3) über eine gekippte Zwischenposition (Figur 4) in eine Freigabeposition (Figur 5) verstellt werden, in welcher der Bereich 30a seitlich der Sitzfläche 26a freigegeben ist. In dieser Freigabeposition sind die Sitzfläche 26a und der Sitzbereich 43a zumindest im Bereich oberhalb der Vorderkante 38a der Sitzfläche 26a, ausgehend von der Sitzfläche 26a zumindest bis in die Höhe der Kopfstütze 29a, vom Grundkörper 32a unbedeckt. Somit kann eine behinderte Person von einem Rollstuhl in den Passagiersitz 10a direkt in Lateralrichtung 34a transportiert werden.

Zur Verstellung des Grundkörpers 32a von der Nutzposition in die Freigabeposition ist eine Lagereinheit 53a vorgesehen (Figur 4). Diese weist eine Schwenkvorrichtung 54a auf, die zur schwenkbaren Lagerung des Grundkörpers 32a relativ zur Sitzfläche 26a dient. Die Lagereinheit 53a ist insbesondere dazu vorgesehen, bei der Überführung des Grundkörpers 32a in die Freigabeposition eine Bewegung von zumindest einem Teil des Grundkörpers 32a seitlich zur Sitzrichtung 14a zu bewirken. Die Schwenkvorrichtung 54a weist hierzu eine erste Schwenkeinheit 56a auf, die eine Schwenkachse 58a bildet, welche sich in Sitzrichtung 14a erstreckt (siehe Figuren 1 bis 3). Die Schwenkeinheit 56a ermöglicht durch eine Schwenkbewegung des Grundkörpers 32a um die horizontale Schwenkachse 58a eine Neigungsbewegung des Grundkörpers 32a relativ zur Vertikalrichtung 40a. Bei dieser Neigungsbewegung führt das obere Ende des Grundkörpers 32a bzw. die Armlehneneinheit 50a mit der Armlehnenfläche 52a eine Kippbewegung in Richtung zu dem Gang 12a aus. Hierzu ist die Schwenkachse 58a in der unteren Hälfte des Grundkörpers 32a angeordnet.

In einer Nutzung des Passagiersitzes 10a in einem Transportbetrieb des Transportmittels wird der Grundkörper 32a mittels einer Verriegelungseinheit 60a in Position gehalten und verriegelt (Figur 2). Dies kann mittels eines nicht näher beschriebenen Systems von Rastelementen oder weiteren, dem Fachmann als sinnvoll erscheinenden Verriegelungssystemen erfolgen. Zur Entriegelung des Grundkörpers 32a durch eine Crew des Transportmittels ist eine Betätigungseinheit 62a vorgesehen (siehe Figur 3), die am Grundkörper 32a angeordnet ist. Die Betätigungseinheit 62a steht in Wirkverbindung mit einer nicht näher beschriebenen Aktorikeinheit, die bei einer Betätigung der Betätigungseinheit 62a automatisch eine Neigungsbewegung des Grundkörpers 32a bewirkt. Hierzu ist der Einsatz von dem Fachmann als sinnvoll erscheinenden Energiespeichern zur Ausführung der Bewegung, wie z.B. von mechanischen und/oder pneumatischen Federelementen, denkbar.

Die Schwenkvorrichtung 54a weist ferner eine zweite Schwenkeinheit 64a auf, die eine von der ersten Schwenkachse 58a unterschiedliche Schwenkachse 66a bildet. Wie der Figur 4 entnommen werden kann, ist die Schwenkachse 66a relativ zum Transportmittelboden 22a geneigt. Die Schwenkachse 66a ist ferner senkrecht zur Schwenkachse 58a ausgerichtet. Die Schwenkeinheit 64a dient dazu, den Grundkörper 32a ausgehend von der in Figur 4 gezeigten geneigten Position in die Freigabeposition um die Schwenkachse 66a hochzuschwenken. Durch die Schwenkung des Grundkörpers 32a in einer geneigten Stellung kann der Grundkörper 32a an einer Seitenkante 68a der Rückenlehne 28a vorbeigefahren werden.

Wie einem Vergleich der Figur 5 mit der Figur 1 oder 3 entnommen werden kann, wird der Grundkörper 32a derart verstellt, dass eine in der Nutzposition vertikale und zur Sitzrichtung 14a senkrechte Frontseite 70a des Grundkörpers 32a durch die Verstellung erhöht wird. Insbesondere ist die Frontseite 70a in der Freigabeposition bezüglich der Vertikalrichtung 40a am oberen Ende des Grundkörpers 32a angeordnet. Dies entspricht einer Rotation um die Schwenkachse 66a von ca. 90°. Durch diese Verstellung wird ein großer Teil des Sitzbereichs 43a, insbesondere im Bereich der Vorderkante 38a der Sitzfläche 26a, freigegeben und es wird eine komfortable Zugänglichkeit zum Sitzbereich 43a geschaffen.

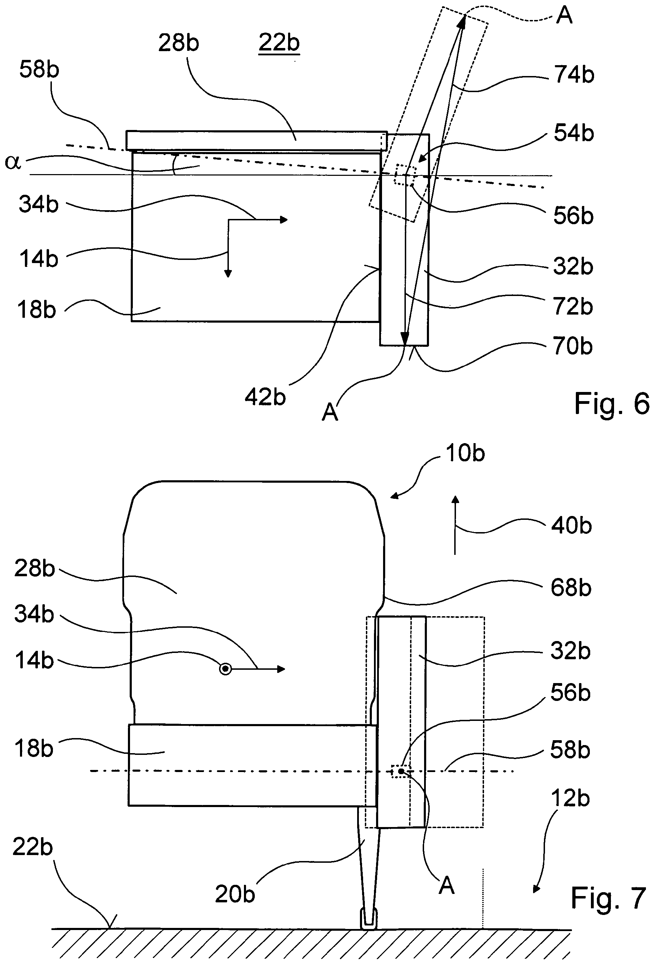

In den Figuren 6 und 7 ist ein alternatives Ausführungsbeispiel einer Passagiersitzvorrichtung eines Passagiersitzes 10b in einer stark schematisierten Form dargestellt, um eine Bewegung eines Grundkörpers 32b von einer Nutzposition zu einer Freigabeposition deutlich zu machen. Die Passagiersitzvorrichtung weist ein Sitzteil 18b auf, das mittels einer in Fig. 7 angedeuteten Aufständereinheit 20b auf einem Transportmittelboden 22b aufgeständert ist. Der Passagiersitz 10b umfasst eine Rückenlehne 28b und weist eine Sitzrichtung 14b auf. In einem Einbauzustand in einem Flugzeug entspricht eine Anordnung des Passagiersitzes 10b derjenigen des Ausführungsbeispiels gemäß den Figuren 1 bis 5.

Im Unterschied zu dem Ausführungsbeispiel gemäß den Figuren 1 bis 5 weist eine Schwenkvorrichtung 54b der Passagiersitzvorrichtung eine einzige Schwenkeinheit 56b auf, die eine Schwenkachse 58b bildet, um die ein Grundkörper 32b zu einer Überführung in die Freigabeposition schwenkbar gelagert ist. Aus einer Draufsicht gemäß der Figur 6 ist erkennbar, dass die Schwenkachse 58b relativ zu einer Lateralrichtung 34b um einen Winkel α gedreht angeordnet ist, so dass die Schwenkachse 58b in der Lateralrichtung 34b gesehen nach vorne zeigt. Aus Gründen der Verdeutlichung wurde in den Fig. 6 und 7 ein Winkel α von 10° verwendet. Der Vorderansicht der Figur 7 lässt sich ferner entnehmen, dass die Schwenkachse 58b parallel zum Transportmittelboden 22b angeordnet ist.

In einer Nutzposition des Grundkörpers 32b erstrecken sich sowohl eine Frontseite 70b als auch eine Seitenfläche 42b des Grundkörpers 32b parallel zu einer Vertikalrichtung 40b. Bei einer Überführung des Grundkörpers 32b von der Nutzposition in eine Freigabeposition bewegt sich der Grundkörper 32b entlang einer Mantelfläche eines virtuellen Kegels, der während der Überführung von einer gedachten Verbindungslinie 72b, die sich in der Nutzposition des Grundkörpers 32b parallel zur Sitzrichtung 14b erstreckt, zwischen einem Punkt A auf der Frontseite 70b des Grundkörpers 32b und der Schwenkachse 58b um die Schwenkachse 58 b beschrieben wird. Der Punkt A wandert während der Schwenkung des Grundkörpers 32b aus der Nutzposition entlang einer Basislinie 74b des virtuellen Kegels. Zur Veranschaulichung der Schwenkung ist der Grundkörper 32b in der Fig. 6 mit gestrichelter Linie in einer Position dargestellt, die einer Schwenkung um 180° aus der Nutzposition, von einem Gang 12b aus gesehen im Uhrzeigersinn, entspricht. Wie aus den Fig. 6 und 7 ersichtlich ist, führt der Grundkörper 32b bei der Schwenkung aus der Nutzposition hin zu der nicht dargestellten Freigabeposition, die einer Schwenkung von etwa 110° um die Schwenkachse 58b in demselben Schwenksinn entspricht, eine überlagerte, simultane Bewegung aus einer Schwenkbewegung nach oben und einer Neigungsbewegung relativ zur Vertikalrichtung 40b aus, so dass der Grundkörper 32b an einer Seitenkante 68b der Rückenlehne 28b vorbeibewegt werden kann.

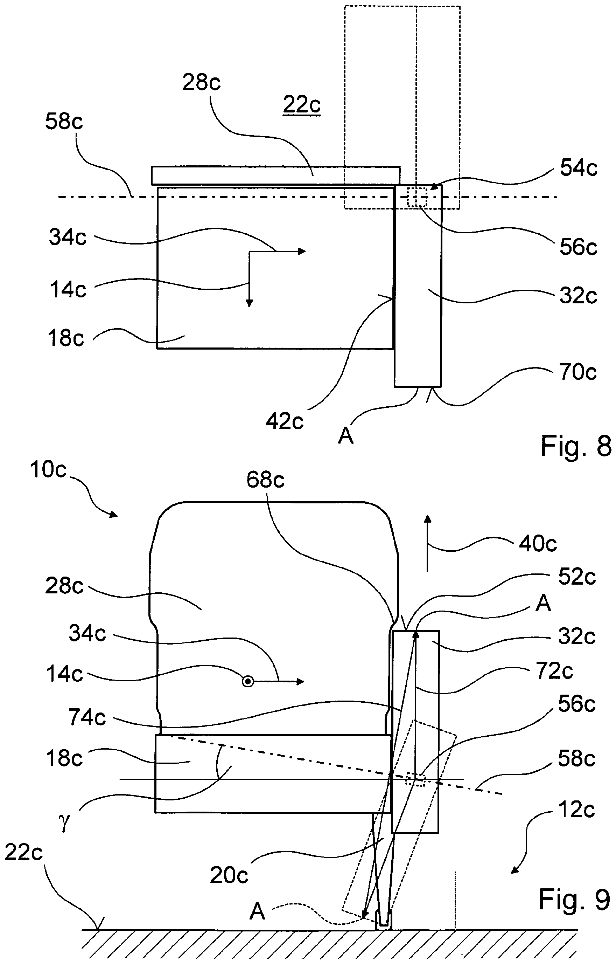

In den Figuren 8 und 9 ist ein weiteres Ausführungsbeispiel einer Passagiersitzvorrichtung eines Passagiersitzes 10c in einer stark schematisierten Form dargestellt, um eine Bewegung eines Grundkörpers 32c von einer Nutzposition zu einer Freigabeposition deutlich zu machen. Die Passagiersitzvorrichtung weist ein Sitzteil 18c auf, das mittels einer in Fig. 9 angedeuteten Aufständereinheit 20c auf einem Transportmittelboden 22c aufgeständert ist. Der Passagiersitz 10c umfasst eine Rückenlehne 28c und weist eine Sitzrichtung 14c auf. In einem Einbauzustand in einem Flugzeug entspricht eine Anordnung des Passagiersitzes 10c derjenigen des Ausführungsbeispiels gemäß den Figuren 1 bis 5.

Im Unterschied zu dem Ausführungsbeispiel gemäß den Figuren 1 bis 5 weist eine Schwenkvorrichtung 54c der Passagiersitzvorrichtung eine einzige Schwenkeinheit 56c auf, die eine Schwenkachse 58c bildet, um die ein Grundkörper 32c zu einer Überführung in die Freigabeposition schwenkbar gelagert ist. Aus einer Vorderansicht gemäß der Figur 9 ist erkennbar, dass die Schwenkachse 58c relativ zu dem Transportmittelboden 22c um einen Winkel γ geneigt angeordnet ist, so dass die Schwenkachse 58c in einer Lateralrichtung 34c gesehen nach unten zeigt. Aus Gründen der Verdeutlichung wurde in den Fig. 8 und 9 ein Winkel γ von 10° verwendet. Der Draufsicht der Figur 8 lässt sich ferner entnehmen, dass die Schwenkachse 58c senkrecht zu der Sitzrichtung 14c angeordnet ist.

In einer Nutzposition des Grundkörpers 32c erstrecken sich sowohl eine Frontseite 70c als auch eine Seitenfläche 42c des Grundkörpers 32c parallel zu einer Vertikalrichtung 40c. Bei einer Überführung des Grundkörpers 32c von der Nutzposition in eine Freigabeposition bewegt sich der Grundkörper 32c entlang einer Mantelfläche eines virtuellen Kegels, der während der Überführung von einer gedachten Verbindungslinie 72c, die sich in der Nutzposition des Grundkörpers 32c parallel zur Vertikalrichtung 40c erstreckt, zwischen einem Punkt A auf einer Armlehnenfläche 52c des Grundkörpers 32c und der Schwenkachse 58c um die Schwenkachse 58 c beschrieben wird. Der Punkt A wandert während der Schwenkung des Grundkörpers 32c aus der Nutzposition entlang einer Basislinie 74c des virtuellen Kegels. Zur Veranschaulichung der Schwenkung ist der Grundkörper 32c in der Fig. 9 mit gestrichelter Linie in einer Position dargestellt, die einer Schwenkung um 180° aus der Nutzposition, von einem Gang 12c aus gesehen im Uhrzeigersinn, entspricht. Wie aus den Fig. 8 und 9 ersichtlich ist, führt der Grundkörper 32c bei der Schwenkung aus der Nutzposition hin zu der nicht dargestellten Freigabeposition, die einer Schwenkung von etwa 110° um die Schwenkachse 58c in demselben Schwenksinn entspricht, eine überlagerte, simultane Bewegung aus einer Schwenkbewegung nach oben und einer Neigungsbewegung relativ zur Vertikalrichtung 40c aus, so dass der Grundkörper 32c an einer Seitenkante 68c der Rückenlehne 28c vorbeibewegt werden kann.

**Bezugszeichen**

| | | | |
|---|---|---|---|
| 10 | Passagiersitz | 54 | Schwenkvorrichtung |
| 12 | Gang | 56 | Schwenkeinheit |
| 14 | Sitzrichtung | 58 | Schwenkachse |
| 16 | Haupterstreckungsrichtung | 60 | Verriegelungseinheit |
| 18 | Sitzteil | 62 | Betätigungseinheit |
| 20 | Aufständereinheit | 64 | Schwenkeinheit |
| 22 | Transportmittelboden | 66 | Schwenkachse |
| 24 | Polsterung | 68 | Seitenkante |
| 26 | Sitzfläche | 70 | Frontseite |
| 28 | Rückenlehne | 72 | Verbindungslinie |
| 29 | Kopfstütze | 74 | Basislinie |
| 30 | Bereich | α | Winkel |
| 32 | Grundkörper | γ | Winkel |
| 34 | Lateralrichtung | A | Punkt |
| 36 | Außenfläche | | |
| 38 | Vorderkante | | |
| 40 | Vertikalrichtung | | |
| 42 | Seitenfläche | | |
| 43 | Sitzbereich | | |
| 44 | Aufnahmebereich | | |
| 46 | Tischvorrichtung | | |
| 48 | Elektronikeinheit | | |
| 50 | Armlehneneinheit | | |
| 52 | Armlehnenfläche | | |
| 53 | Lagereinheit | | |

## Patentansprüche

1. Passagiersitzvorrichtung, insbesondere Fluggastsitzvorrichtung, mit einem Sitzteil (18), das eine Sitzfläche (26) aufweist, einer Sitzrichtung (14) und einem Grundkörper (32), welcher in einem Einbauzustand in einem Transportmittel an einen Gang (12) angrenzt und in einer Nutzposition in einem Bereich (30) bezüglich der Sitzrichtung (14) seitlich der Sitzfläche (26) diese Sitzfläche (26) seitlich bedeckt, mit einer Lagereinheit (53) zur beweglichen Lagerung des Grundkörpers (32), die dazu vorgesehen ist, den Grundkörper (32) von der Nutzposition in eine Freigabeposition mit einer zur Sitzfläche (26) relativen Bewegung zu verstellen, die eine Freigabe des Bereichs (30) seitlich der Sitzfläche (26) bewirkt, und mit einer Schwenkvorrichtung (54) zur schwenkbaren Lagerung des Grundkörpers (32) relativ zur Sitzfläche (26), **dadurch gekennzeichnet, dass** die Schwenkvorrichtung (54) zumindest zwei unterschiedliche Schwenkachsen (58, 66) aufweist, wobei eine (58) der Schwenkachsen zur Neigungsbewegung des Grundkörpers (32) relativ zu einer Vertikalrichtung (40) vor einer Schwenkung in die Freigabeposition um die andere Schwenkachse (66) vorgesehen ist.

2. Passagiersitzvorrichtung nach Anspruch 1, **dadurch gekennzeichnet, dass** der Grundkörper (32) einen Aufnahmebereich (44) aufweist, der zur Aufnahme von zumindest einem Funktionsbauteil (46, 48) vorgesehen ist.

3. Passagiersitzvorrichtung nach Anspruch 2, **gekennzeichnet durch** eine Elektronikeinheit, die in einer Stauposition im Aufnahmebereich (44) angeordnet ist.

4. Passagiersitzvorrichtung nach einem der vorhergehenden Ansprüche, **gekennzeichnet durch** eine Armlehneneinheit (50) mit einer Armlehnenfläche (52), wobei der Grundkörper (32) die Armlehnenfläche (52) trägt.

5. Passagiersitzvorrichtung nach einem der vorhergehenden Ansprüche, **dadurch gekennzeichnet, dass** die Lagereinheit (53) dazu vorgesehen ist, bei der Überführung des Grundkörpers (32) in die Freigabeposition eine Bewegung von zumindest einem Teil des Grundkörpers (32) seitlich zur Sitzrichtung (14) zu bewirken.

6. Passagiersitzvorrichtung nach Anspruch 5, **dadurch gekennzeichnet, dass** die Lagereinheit (53) dazu vorgesehen ist, bei einer Überführung in die Freigabeposition eine Neigungsbewegung des Grundkörpers (32) relativ zu einer Vertikalrichtung (40) zu bewirken.

7. Passagiersitzvorrichtung nach einem der vorhergehenden Ansprüche, **dadurch gekennzeichnet, dass** die Schwenkvorrichtung (54) eine einzige Schwenkachse (58) aufweist, um die der Grundkörper (32) zur Überführung in die Freigabeposition schwenkbar gelagert ist.

8. Passagiersitzvorrichtung nach Anspruch 7, **dadurch gekennzeichnet, dass** die Schwenkachse (58) gegenüber einem Transportmittelboden (22) geneigt und senkrecht zur Sitzrichtung (14) angeordnet ist.

9. Passagiersitzvorrichtung nach Anspruch 7, **dadurch gekennzeichnet, dass** die Schwenkachse (58) parallel zum Transportmittelboden (22) und relativ zu einer Lateralrichtung (34) gedreht angeordnet ist.

10. Passagiersitzvorrichtung nach einem der vorhergehenden Ansprüche, **gekennzeichnet durch** eine Verriegelungseinheit (60), die zu einer Verriegelung des Grundkörpers (32) in der Nutzposition vorgesehen ist.

11. Passagiersitzvorrichtung nach Anspruch 10, **gekennzeichnet durch** eine Betätigungseinheit (62) zur Entriegelung des Grundkörpers (32), die dazu vorgesehen ist, bei einer Entriegelung des Grundkörpers (32) zumindest eine Teilbewegung des Grundkörpers (32) automatisch zu bewirken.

## Claims

1. Passenger seat device, in particular flight passenger seat device, with a seat part (18) comprising a seat surface (26), with a seat direction (14) and with a base body (32) which, when installed in a transport means, borders on an aisle (12) and in a use position laterally covers the seat surface (26) in a region (30) beside the seat surface (26) with respect to the seat surface (26), with a support unit (53) for movably supporting the base body (32) which is provided to adjust the base body (32) from the use position into a release position by a movement relative to the seat surface (26) causing a release of the region (30) beside the seat surface (26), and with a pivoting device (54) for supporting the base body pivotably with respect to the seat surface (26), **characterised in that** the pivoting device (54) comprises at least two different pivot axes (58, 66), one (58) of the pivot axes being provided for an inclining movement of the base body (32) with respect to a vertical direction (40) prior to pivoting about the other pivot axis (66) into the release position.

2. Passenger seat device as claimed in claim 1, **characterised in that** the base body (32) comprises a receiving region (44) that is provided to receive at least one functional component (46, 48).

3. Passenger seat device as claimed in claim 2, **characterised by** an electronics unit, which is arranged in a stowage position in the receiving region (44).

4. Passenger seat device as claimed in any one of the preceding claims, **characterised by** an armrest unit (50) with an armrest surface (52), the base body (32) carrying the armrest surface (52).

5. Passenger seat device as claimed in any one of the preceding claims, **characterised in that** the support unit (53) is provided to effect a movement of at least one part of the base body (32) sideways with respect to the seat direction (14) when the base body (32) is transferred into the release position.

6. Passenger seat device as claimed in claim 5, **characterised in that** the support unit (53) is provided to effect, in a transfer into the release position, an inclining movement of the base body (32) with respect to a vertical direction (40).

7. Passenger seat device as claimed in any one of the preceding claims, **characterised in that** the pivoting device (54) comprises one single pivot axis (58), the base body (32) being supported pivotably about said pivot axis (58) for the transfer into the release position.

8. Passenger seat device as claimed in claim 7, **characterised in that** the pivot axis (58) is inclined with respect to a transport means floor (22) and is arranged perpendicularly to the seat direction (14).

9. Passenger seat device as claimed in claim 7, **characterised in that** the pivot axis (58) is arranged parallel to the transport means floor (22) and rotated with respect to a lateral direction (34).

10. Passenger seat device as claimed in any one of the preceding claims, **characterised by** a locking unit (60), which is provided for locking the base body (32) in the use position.

11. Passenger seat device as claimed in claim 10, **characterised by** an actuation unit (62) for unlocking the base body (32), the actuation unit (62) being provided to automatically cause at least a partial movement of the base body (32) when the base body (32) is unlocked.

## Revendications

1. Dispositif de siège passager, notamment dispositif de siège passager d'avion, avec un élément de siège (18) comportant une surface de siège (26), avec une direction de siège (14) et avec un corps de base (32) adjacent, en état d'être installé dans un moyen de transport, à une allée (12) et couvrant, en position d'usage, la surface de siège (26) latéralement dans une zone (30) à côté de la surface de siège (26) par rapport à la direction de siège (14), avec une unité de support (53) pour supporter le corps de base (32) mouvablement, laquelle est prévue à ajuster le corps de base (32) de la position d'usage dans une position de relâchement par le biais d'un mouvement relatif à la surface de siège (26), le mouvement effectuant un relâchement de la zone (30) à côté de la surface de siège (26), et avec un dispositif de pivotement (54) pour un support pivotant du corps de base (32) par rapport à la surface de siège (26), **caractérisé en ce que** le dispositif de pivotement (54) comporte au moins deux axes pivotants (58, 66) différents, l'un (58) des axes pivotants étant prévu à un mouvement inclinant du corps de base (32) par rapport à une direction verticale (40) avant d'un pivotement autour de l'autre axe pivotant (66) dans la position de relâchement.

2. Dispositif de siège passager selon la revendication 1, **caractérisé en ce que** le corps de base (32) comporte une zone recevante (44) prévue à recevoir au moins un composant fonctionnel (46, 48).

3. Dispositif de siège passager selon la revendication 2, **caractérisé par** une unité électronique disposée dans la zone recevante (44) dans une position de rangement.

4. Dispositif de siège passager selon l'une quelconque des revendications précédentes, **caractérisé par** une unité d'accoudoir (50) avec une surface d'accoudoir (52), le corps de base (32) supportant la surface d'accoudoir (52).

5. Dispositif de siège passager selon l'une quelconque des revendications précédentes, **caractérisé en ce que** l'unité de support (53) est prévue à effectuer, en transférant le corps de base (32) dans la position de relâchement, un mouvement d'au moins une part du corps de base (32) latéralement par rapport à la direction de siège (14).

6. Dispositif de siège passager selon la revendication 5, **caractérisé en ce que** l'unité de support (53) est prévue à effectuer, en transfert dans la position de relâchement, un mouvement inclinant du corps de base (32) relatif à une direction verticale (40).

7. Dispositif de siège passager selon l'une quelconque des revendications précédentes, **caractérisé en ce que** le dispositif pivotant (54) comporte un singulier axe pivotant (58), le corps de base (32) étant supporté pivotamment autour duquel axe pivotant (58) pour le transfert dans la position de relâchement.

8. Dispositif de siège passager selon la revendication 7, **caractérisé en ce que** l'axe pivotant (58) est incliné contre un fond du moyen de transport (22) et est disposé perpendiculairement à la direction de siège (14).

9. Dispositif de siège passager selon la revendication 7, **caractérisé en ce que** l'axe pivotant (58) est disposé parallèlement au fond du moyen de transport (22) et tourné relatif à une direction latérale (34).

10. Dispositif de siège passager selon l'une quelconque des revendications précédentes, **caractérisé par** une unité de verrouillage (60) prévue à verrouiller le corps de base (32) dans la position d'usage.

11. Dispositif de siège passager selon la revendication 10, **caractérisé par** une unité d'actuation (62) pour déverrouiller le corps de base (32), laquelle est prévue à effectuer automatiquement, en déverrouillant le corps de base (32), au moins un mouvement partiel du corps de base (32).
